# EUROPÄISCHE PATENTSCHRIFT

(11) **EP 2 087 333 B1**
(45) Veröffentlichungstag und Bekanntmachung des Hinweises auf die Patenterteilung: **17.08.2011**
(21) Anmeldenummer: 07816240.1
(22) Anmeldetag: 12.11.2007
(51) Int. Cl.: G01L 19/04, G01L 23/10

(54) **DRUCKSENSOR FÜR MESSUNGEN IN HEISSEN, DYNAMISCHEN PROZESSEN**
PRESSURE SENSOR FOR MEASUREMENTS IN HOT, DYNAMIC PROCESSES
CAPTEUR DE PRESSION POUR EFFECTUER DES MESURES DANS LE CADRE DE PROCESSUS DYNAMIQUES À HAUTE TEMPÉRATURE

(30) Priorität: 10.11.2006 AT 18662006
(43) Veröffentlichungstag der Anmeldung: 12.08.2009
(73) Patentinhaber: Kistler Holding AG, 8408 Winterthur (CH)
(72) Erfinder: GLASER, Josef, 8047 Graz (AT)
(86) Internationale Anmeldenummer: PCT/CH2007/000557
(87) Internationale Veröffentlichungsnummer: WO 2008/055377

(56) Entgegenhaltungen:
- EP-A- 1 498 599
- DE-A1- 1 900 970
- DE-U1- 8 903 667
- DE-U1- 29 716 060

## Beschreibung

### Technisches Gebiet

Die Erfindung betrifft einen Drucksensor mit einer Sensorfront für die Messung in heissen, dynamischen Prozessen, umfassend ein zylindrisches Gehäuse, in dem sich ein Messelement befindet, sowie eine runde oder ringförmige Membrane mit mindestens einem äusseren Auflager, wobei das äussere Auflager am Gehäuse von der Sensorfront her zurückversetzt, hinter einem Gehäusefortsatz angebracht ist, nach dem Oberbegriff des ersten Patentanspruchs.

### Stand der Technik

Messung in heissen, dynamischen Prozessen sind oft Messfehlern unterworfen, die von thermisch bedingten Verformungen der Sensorstirn stammen. Da die Messelemente in den Sensoren Messdaten auf Grund einer axialen Verschiebung der Membrane erfassen, ergeben sich Fehlmessungen durch Verkippen der Membraneinspannungen.

Zündungen in Brennräumen, beispielsweise Motoren, verursachen kurzzeitige, zyklische Temperaturspitzen von teilweise über 2000K. Um in einem solchen Brennraum Drücke messen zu können, dürfen die starken, kurzzeitigen Temperaturschwankungen keine Messfehler verursachen. Zu diesem Zweck werden beispielsweise metallische Gitter in Einbaubohrungen vor die Sensoren eingelegt, welche als Flammschutz wirken. Nachteilig an solchen Systemen ist, dass diese Gitter mühselig aus den Bohrungen geholt werden müssen beim Ausbau der Sensoren.

Eine solche Anordnung ist beispielsweise in der DE29716060U1 in Fig. 2 angegeben.

In einer weiteren Druckschrift, in der DE 1900970 ist ein piezoelektrischer Druckwandler angegeben, der vor der Membrane ein Hitzeschild aufweist zum Schutz der Membran vor Hitzeeinwirkung. Es hat sich aber gezeigt, dass eine Temperaturschwankung in der Anbringung der Membran kritisch ist und ein Fehlsignal erzeugen kann durch eine thermisch bedingte Verkippung derselben.

Ebenfalls in der DE29716060U1, in Fig. 1, ist ein weiterer Sensor zur Druckmessung in heissen Medien beschrieben, welcher zur Kühlung von einem Kühlmedium durchströmt wird. Zudem ist der Bereich des Messelements und der Membrane mit einer weichen Wärmeisolationsschicht umhüllt und anschliessend mit einem Thermoschutzelement ummantelt, das frontseitig Bohrungen aufweist und aus einem wärmeleitenden Material besteht. Nachteilig an dieser Anordnung ist einerseits, dass das aufgeschraubte Thermoschutzelement beim Herausschrauben des Sensors oftmals unglücklicherweise in der Montagebohrung steckenbleibt. Zudem ist für diese Anordnung eine Sensorkühlung durch ein durchströmendes Kühlmittel unerlässlich, was den Aufbau kompliziert macht. Das Thermoschutzelement schützt vor allem die Isolationsschicht, die in Brennräumen sonst nach ca. 15 Min. im Einsatz verschmolzen wäre.

### Darstellung der Erfindung

Die Aufgabe der vorliegenden Erfindung ist es, einen Drucksensor eingangs beschriebener Art anzugeben, der unempfindlich auf kurzzeitige Temperaturspitzen reagiert.

Die Aufgabe wird dadurch gelöst, dass der Gehäusefortsatz mit einem Hitzeschild versehen ist, der ausser an seinen Rändern beabstandet angebrachten ist. Dadurch wird die Erwärmung der Sensorspitze und somit die radiale Expansion des Gehäusefortsatzes verringert, was weniger Verdrehung und Verspannung der Membran und letztlich einen geringeren Messfehler bedeutet.

Die thermischen Verformungen der Sensorbauteile sind unvermeidlich. Um Messfehler zu vermeiden, muss deren Rückwirkung auf das Messsignal möglichst vermieden werden.

Die Verformung entsteht im Wesentlichen durch zwei Effekte. Zum einen übt die temperaturbedingte Verformung der Membrane Kräfte auf das Auflager aus und verformt diese. Diese Verformungen bewirken wiederum eine Kraft auf die Membran. Zum anderen wird das Auflager selbst beheizt und verwirft sich durch deren Ausdehnung.

Die beheizte Membrane wird in ihrer Wärmedehnung durch die Auflager behindert und erzeugt dadurch grosse radiale Kräfte. Diese Kräfte haben keine Rückwirkung auf das axial wirkende Messelement, wenn die Membrane exakt radial ausgerichtet ist. Bei der üblichen Ausführung der Messelementauflager wird aber das Auflager auch verdreht / tordiert und verdreht die Membrane mit. Aus dieser Verformung entstehen axiale Verschiebungen zwischen dem radial inneren liegenden Membranbereich und dem aussen liegenden. Die vorliegende Erfindung vermeidet eine solche Verdrehung der Auflager.

### Kurze Beschreibung der Zeichnungen

Im Folgenden wird die Erfindung unter Beizug der Zeichnungen näher erklärt. Es zeigen
- Fig. 1: eine Darstellung eines erfindungsgemässen Drucksen- sors im Schnitt, einseitig in eine Vorrichtung ein- gebaut;
- Fig. 2: eine alternative Darstellung eines erfindungsgemäs- sen Drucksensors im Schnitt mit einem Aussengewinde am Hitzeschild;
- Fig. 3: eine wiederum alternative Darstellung eines erfin- dungsgemässen Drucksensors im Schnitt mit einem Stempel auf der Membran, geschützt mit einem Hitze- schild.

### Wege zur Ausführung der Erfindung

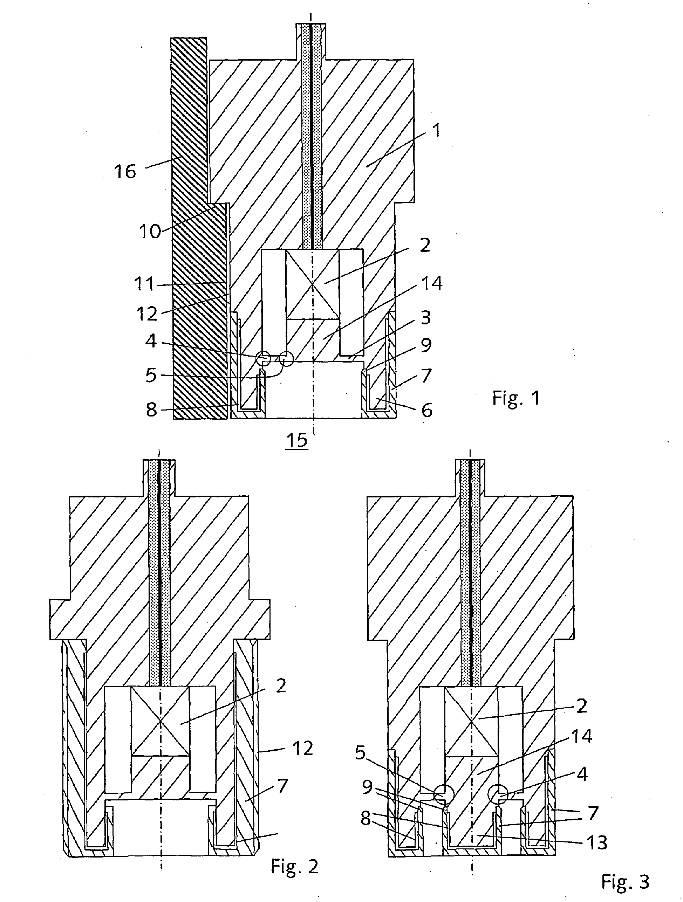

Die Fig. 1 zeigt eine Darstellung eines erfindungsgemässen Drucksensors für die Messung in heissen, dynamischen Prozessen im Schnitt, einseitig in eine Vorrichtung 16 eingebaut. Vor dem Sensor befindet sich beispielsweise ein Brennraum 15, dessen Drücke der Sensor messen soll.

Der Sensor umfasst ein Gehäuse 1, in dem sich ein Messelement 2 befindet, sowie eine runde Membrane 3 mit einem äusseren Auflager 4. Dieses Auflager 4 kann als Gelenk betrachtet werden, um welches die Membrane 3 schwingen kann. Das Messelement kann Messdaten auf Grund einer axialen Verschiebung der Membrane 3 erfassen. Axiale Verschiebungen, die nicht von einer Druckdifferenz im Brennraum 15 sondern von einer thermischen Ausdehnung von Sensorkomponenten herrühren, bewirken demnach eine Fehlmessung. Radiale Ausdehnungen der Membrane 3 bewirken allerdings keinen Messfehler.

Das Auflager 4 am Gehäuse 1 ist zurückversetzt, hinter einem Gehäusefortsatz 6 angebracht. Dadurch ist der Wärmeeinfluss auf der Membrane 3 bereits geringer, als wenn die Membrane stirnseitig am Gehäuse 1 angebracht ist.

Erfindungsgemäss ist der Gehäusefortsatz 6 mit einem Hitzeschild 7 versehen, der, ausser an seinen Rändern 9, beabstandet hinter einem Spalt 8 angebrachten ist. Der Hitzeschild ist aus einem Material, das Temperaturen über 600°C aushält, beispielsweise aus Stahl. Dank der in Gegensatz zu wärmeisolierenden Materialien vergleichsweise hohen Wärmeleitfähigkeit von Metallen verteilt sich die Wärme schnell und kann nach aussen abgeleitet werden. Die Hauptwirkungsweise des Hitzeschildes ist es aber, eine Wärmebarriere, nämlich den Spalt 8 zu schaffen, der eine sehr geringe Wärmeleitung aufweist. Die Wärme wird demnach hauptsächlich durch Strahlung vom Hitzeschild zum Gehäusefortsatz 6 übertragen, was um ein Vielfaches geringer ist als die Wärmeübertragung durch Leitung. Der Hitzeschild 7 ist nur an seinen Rändern 9 in Kontakt mit dem Gehäuse 1. Der eine Rand 9 befindet sich in unmittelbarer Nähe des äusseren Auflagers 4. Der andere Rand 9 befindet sich auf der Aussenseite des Gehäuses 1. An dieser Aussenseite des Gehäuses 1 kann sich auch ein Gewinde 12 befinden, welches die schulterdichtende Montage des Sensors in einer Bohrung 11 der Vorrichtung 16 erlaubt. Dazu ist ein Absatz 10 vorgesehen, an dem der Sensor dichtend anliegt.

Die Ränder 9 des Hitzeschildes 7 sind vorzugsweise dicht verschweisst am Gehäuse 1 angebracht, damit bei einer Verbrennung im Brennraum 15 keine heissen Gase in den Spalt 8 gelangen. Eine undichte Stelle könnte einen einseitigen Gaseintritt erlauben, was eine einseitige Erwärmung des Gehäusefortsatzes 6 und deren asymmetrische Ausdehnung zur Folge hätte. Dies wiederum bewirkt eine Verwerfung der Membrane, was zu einem Messfehler führt.

Alle hier beschriebenen Merkmale gelten auch für die Beschreibungen der Figuren 2 und 3, welche dieselben Bezeichnungen tragen wir Fig. 1.

Das Messelement 2 kann in allen Anordnungen insbesondere ein piezoelektrisches, piezoresistives, kapazitives, induktives, oder optisches Messelement 2 oder ein Dehnmessstreifen sein. Der in Fig. 1-3 dargestellte Aufbau entspricht einem piezoelektrischen Messelement 2, das sich über eine Druckplatte 14 auf der Membrane 3 abstützt. Drucksensoren mit anderen Messelementen sind entsprechend konstruiert, unterscheiden sich aber nicht in den ansonsten beschriebenen Merkmalen. Insbesondere umfassen sie auch die Membrane 3 mit dem äusseren Auflager 4 und das beabstandet angeordnete Hitzeschild 7.

Das Messelement 2 kann vorzugsweise in einem eigenen Messeinsatz (nicht dargestellt) gelagert sein, der in einem Hohlraum im Gehäuse 1 angeordnet ist. Dieser Messeinsatz kann beispielsweise eine Hülse sein, welche die Vorspannung des Messelements aufbringt. Er ist nahe der Membrane im Membranauflagerbereich angebunden, wo keine starken Verformungen des Gehäuses 1 auftreten. Damit ist das Auflager 4 auch gegen Verformungen der Montagestelle geschützt.

Fig. 2 beschreibt einen Drucksensor wie Fig. 1, wobei lediglich das Gewinde 12 für die Montage des Sensors in einer Bohrung 11 direkt am Hitzeschild 7 angebracht ist. Entsprechend ist der Hitzeschild 7 in diesem äusseren Bereich stärker ausgeführt als in inneren Bereich. Dazu ist der Hitzeschild 7 auf der Aussenseite des Gehäuses 1 weiter nach hinten beführt, in Richtung des Absatzes 10. Der direkte Kontakt zwischen Hitzeschild 7 und Vorrichtung 16 verbessert die Abführung der Wärme aus den heissen Gebieten.

Fig. 3 entspricht wiederum Fig. 1, wobei die Membrane in dieser Anordnung ringförmig ausgestaltet ist. Somit verfügt die Membrane 3 auch über ein inneres Auflager 5, an welchem ein Stempel 13 angebracht ist. Dieser ist innerhalb des Gehäusefortsatz 6 angeordnet und ebenfalls mit einem Hitzeschild 7 oben beschriebener Art versehen. Insbesondere ist auch dieser Hitzeschild, ausser an seinen Rändern, beabstandet angebrachten. Diese Anordnung ist bevorzugt, weil der Grossteil der Membrane nun durch Stempel 13 und Hitzeschild 7 sehr gut vor Wärme geschützt ist. Der restliche, übrig bleibende Teil der Membrane 3 ist nun zurückversetzt, demnach geschützt, und kleiner, was kleine Verwerfungen und Spannungen verursacht. Insbesondere ist es vorteilhaft, auch die Ränder 9 dieses zweiten Hitzeschildes dicht zu verschweissen.

### Bezugszeichenliste

- 1: Gehäuse
- 2: Messelement
- 3: Membrane
- 4: Auflager, äusseres
- 5: Auflager, inneres
- 6: Gehäusefortsatz
- 7: Hitzeschild
- 8: Spalt
- 9: Rand, Anbindungsstelle
- 10: Absatz
- 11: Bohrung
- 12: Gewinde
- 13: Stempel
- 14: Druckplatte
- 15: Brennraum
- 16: Vorrichtung

## Patentansprüche

1. Drucksensor mit einer Sensorfront für die Messung in heissen, dynamischen Prozessen, umfassend ein zylindrisches Gehäuse (1), in dem sich ein Messelement (2) befindet, sowie eine runde oder ringförmige Membrane (3) mit mindestens einem äusseren Auflager (4), wobei das äussere Auflager (4) am Gehäuse von der Sensorfront her (1) zurückversetzt, hinter einem Gehäusefortsatz (6) angebracht ist, und wobei das Messelement (2) Messdaten auf Grund einer axialen Verschiebung der Membrane (3) erfassen kann, **dadurch gekennzeichnet, dass** der Gehäusefortsatz (6) mit einem Hitzeschild (7) ummantelt ist, der ausser an seinen Rändern (9) durch einen Spalt beabstandet (8) angebracht ist.

2. Drucksensor nach Anspruch 1, **Dadurch gekennzeichnet, dass** das Gehäuse (1) über einen Absatz. (10) verfügt für eine schulterdichtende Montage des Sensors.

3. Drucksensor nach Anspruch 1 oder 2, **dadurch gekennzeichnet, dass** das Messelement (2) ein piezoelektrisches, piezoresistives, kapazitives, induktives, oder optisches Messelement oder ein Dehnmessstreifen ist.

4. Drucksensor nach einem der vorhergehenden Ansprüche, **dadurch gekennzeichnet, dass** der Hitzeschild (7) an seinem äusseren Rand (9) über ein Gewinde (12) verfügt zum montieren des Sensors in eine Bohrung (11).

5. Drucksensor nach einem der vorhergehenden Ansprüche, wobei die Membrane (3) ringförmig ist, **dadurch gekennzeichnet, dass** die Membrane (3) Ober ein inneres Auflager (5) verfügt, an welchem ein Stempel (13) angebracht ist, welcher innerhalb des Gehäusefortsatz (6) angeordnet ist und mit einem Hitzeschild (7) ummantelt ist, der, ausser an seinem Rand, beabstandet angebracht ist.

6. Drucksensor nach einem der vorhergehenden Ansprüche, **dadurch gekennzeichnet, dass** der Hitzeschild (7) an seinen Rändern (9), die im Bereich eines Auflagers (4, 5) sind, dicht verschweisst ist.

7. Drucksensor nach einem der vorhergehenden Ansprüche, **dadurch gekennzeichnet, dass** das Messelement (2) in einem Messeinsatz gelagert ist, wobei der Messeinsatz in einem Hohlraum im Gehäuse (1) im Bereich des Auflagers (4) des Gehäuse (1) angebracht ist und eine Vorspannung auf das Messelement aufbringt.

## Claims

1. A pressure sensor having a sensor front for measurement in hot, dynamic processes comprising a cylindrical housing (1) in which is arranged a measuring element (2) as well as a circular or annular membrane (3) having at least an outer support (4) wherein said outer support (4) is disposed on the housing (1) set back from the front side behind a housing extension (6), and wherein said measuring element (2) is adapted to acquire measurement data due to an axial displacement of the membrane (3) **characterized in that** the housing extension (6) is sheathed by a heat shield (7) that is disposed, except at its edges (9), interspaced by a gap (8).

2. The pressure sensor according to claim 1 **characterized in that** the housing (1) is provided with a recess (10) for mounting the sensor into sealing engagement with the recess.

3. The pressure sensor according to claim 1 or 2 **characterized in that** the measuring element (2) is a piezoelectric, piezoresistive, capacitive, inductive, or optical measuring element or a strain gauge.

4. The pressure sensor according to any of the preceding claims **characterized in that** the heat shield (7) has a thread (12) at its outer edge (9) for mounting the sensor into a bore (11).

5. The pressure sensor according to any of the preceding claims wherein the membrane (3) has an annular shape **characterized in that** said membrane (3) has an inner support (5) at which a plunger (13) is attached that is disposed within the housing extension (6) and is sheathed with a heat shield which, except at its edge, is arranged in an interspaced manner.

6. The pressure sensor according to any of the preceding claims **characterized in that** the heat shield (7) is tightly welded at its edges (9) which are in the region of a support (4, 5).

7. A pressure sensor according to any of the preceding claims **characterized in that** the measuring element (2) is seated in a measurement insert wherein said measurement insert is arranged in a cavity within the housing (1) in the region of the support (4) of the housing (1) and applies a preload onto the measuring element.

## Revendications

1. Un capteur de pression ayant une partie frontale de capteur pour la mesure dans des processus chauds et dynamiques, ledit capteur comprenant un boîtier cylindrique (1) dans lequel se trouve un élément de mesure (2) ainsi qu'une membrane circulaire ou annulaire (3) ayant au moins un appui extérieur (4) ledit appui extérieur (4) étant mis en place au boîtier (1) en retrait du coté de la partie frontale de capteur derrière un prolongement (6) du boîtier, et dans lequel ledit élément de mesure (2) est adapté à recueillir données de mesure par un décalage axial de la membrane (3) **caractérisé en ce que** ledit prolongement (6) du boîtier est revêtu d'un bouclier thermique (7) disposé, à l'exception de ses bords (9), de manière espacé par un interstice (8).

2. Le capteur de pression selon la revendication 1 **caractérisé en ce que** le boîtier (1) est pourvu avec un épaulement (10) pour un montage étanche sur épaulement du capteur.

3. Le capteur de pression selon la revendication 1 ou 2 **caractérisé en ce que** ledit élément de mesure (2) est un élément de mesure piézoélectrique, piézorésistif, capacitif, inductif ou optique ou un jauge de contrainte.

4. Le capteur de pression selon l'une des revendications précédentes **caractérisé en ce que** ledit bouclier thermique (7) est muni à son bord externe (9) avec un filetage (12) pour la montage du capteur dans un taraudage (11).

5. Le capteur de pression selon l'une des revendications précédentes dans lequel ladite membrane (3) a une forme annulaire **caractérisé en ce que** ladite membrane (3) a un appui intérieur (5) auquel est attaché un piston (13) disposé dans ledit prolongement (6) du boîtier et revêtu d'un bouclier thermique (7) disposé, à l'exception de son bord (9), de manière espacé.

6. Le capteur de pression selon l'une des revendications précédentes **caractérisé en ce que** ledit bouclier thermique (7) est soudé de manière étanche à ses bordures (9) se situant dans la région d'un appui (4, 5).

7. Le capteur de pression selon l'une des revendications précédentes **caractérisé en ce que** l'élément de mesure (2) est monté dans un insert de mesure ledit insert de mesure étant disposé dans une cavité du boîtier (1) dans la région de l'appui (4) du boîtier (1) et exerçant une prétension a l'élément de mesure.
